# EUROPÄISCHE PATENTSCHRIFT

(11) **EP 1 030 981 B1**
(45) Veröffentlichungstag und Bekanntmachung des Hinweises auf die Patenterteilung: **26.03.2003**
(21) Anmeldenummer: 98962241.0
(22) Anmeldetag: 11.11.1998
(51) Int. Cl.: F16D 65/16

(54) **ELEKTROMECHANISCHE BREMSE FÜR KRAFTFAHRZEUGE**
ELECTROMECHANICAL BRAKE FOR MOTOR VEHICLES
FREIN ELECTROMECANIQUE POUR VEHICULES AUTOMOBILES

(30) Priorität: 13.11.1997 DE 19750274
(43) Veröffentlichungstag der Anmeldung: 30.08.2000
(73) Patentinhaber: ROBERT BOSCH GMBH, 70442 Stuttgart (DE)
(72) Erfinder: SCHAFFER, Wolfram, D-71679 Asperg (DE)
(86) Internationale Anmeldenummer: DE9803290
(87) Internationale Veröffentlichungsnummer: WO99025988

(56) Entgegenhaltungen:
- DE-A- 19 650 405
- DE-C- 19 607 295
- US-A- 4 567 967
- US-A- 5 219 048
- US-A- 5 829 557

## Beschreibung

### Stand der Technik

Die Erfindung geht aus von einer elektromechanischen Bremse nach der Gattung des Patentanspruchs 1.

Bei derartigen Bremsen muß ein selbsttätiges Lösen des Reibbelags sichergestellt sein, wenn während einer Bremsung der elektrische Antriebsmotor ausfällt. Bei einer aus WO96/03301 bekannten Scheibenbremse dieser Art ist deshalb eine Druckstange zwischen der Spindel und dem am Bremsbelag befestigten plattenförmigen Koppelglied angeordnet, um auf Reibung zurückzuführende Wirkungsgradverluste innerhalb eines die Spindel enthaltenden, selbsthemmungsfreien Rollengewindetriebs zu minimieren. Da der Bremsbelag im Bremssattel ein zur ordnungsgemäßen Funktion der Scheibenbremse notwendiges Spiel hat, kommt es beim Anpressen des Bremsbelags-an die Bremsscheibe zu einer Verlagerung des mit dem Bremsbelag fest verbundenen Koppelelements in Scheibenumfangsrichtung sowie auch quer zu dieser mit der Folge, daß die Druckstange Querkräfte auf die Spindel überträgt. Die gewünschte Reibungsarmut des Rollengewindetriebs wird daher nicht erzielt, so daß ein selbsttätiges Lösen des Bremsbelags im Fehlerfall nicht immer sichergestellt ist.

Bei einer gattungsbildenden elektromechanischen Bremse für Kraftfahrzeuge gemäß DE 196 07 295 C1 ist zwischen einer Spindelstange einer Planeten-Wälz-Gewindespindel und einem Bremsbelag ein schicht- oder scheibenförmiges Gleitlager als Koppelglied angeordnet, mit dem eine Querkraftentkopplung zwischen der Spindelstange und dem Bremsbelag erfolgen soll. Dabei ist eine Gleitbeweglichkeit quer zur Spindellängsachse zwischen der Spindelstange und dem Gleitlager vorgesehen. Aufgrund der relativ großflächigen Berührung zwischen der Spindelstange und dem Gleitlager ist eine Selbstrückstellung der Spindelstange bei Antriebsmotorausfall nicht gegeben.

Aus US-A-5 219 048 ist eine elektromechanische Bremse bekannt, bei der Bremsbeläge mit einem Kugel-Rampen-Mechanismus gegen ein rotierendes Reibelement bewegbar sind. Die Bremsbeläge sind mittels Haltebugeln mit einem Bremssattel beziehungsweise einer Verschleißausgleichseinrichtung der Bremse verbunden.

### Vorteile der Erfindung

Die erfindungsgemäße Bremse mit den Merkmalen des Patentanspruchs 1 hat demgegenüber den Vorteil, daß am Beginn des Anpressens des Bremsbelags an das Reibelement sich der Bremsbelag relativ zum Koppelglied verlagern kann, während letzteres seine Zuordnung zur Spindel beibehält. Damit werden Querkräfte auf die Spindel weitgehend vermieden, so daß deren Selbstrückstellung bei Antriebsmotorausfall gewährleistet ist. Diese Selbstrückstellung wird durch die reibungsvermindernde Lagerausbildung zwischen der Spindel und dem Koppelglied unterstützt. Außerdem baut die Bremse kürzer, da die Spindel ohne Druckstange am Koppelglied angreift.

Durch die in den Unteransprüchen aufgeführten Maßnahmen sind vorteilhafte Weiterbildungen und Verbesserungen der im Patentanspruch 1 angegebenen Bremse möglich.

Die in den Ansprüchen 2 und 3 angegebenen Maßnahmen dienen darüber hinaus der beanspruchungsgerechten Gestaltung von Koppelglied und Spindel sowie gleichfalls der Reibungsverminderung.

Mit der Weiterbildung der Bremse nach Anspruch 4 wird eine Selbstrückstellung des Bremsbelags bei Bremsabschluß relativ zum Koppelglied erzielt.

Die Maßnahme gemäß Anspruch 5 hat den Vorteil, daß bei gelöster Bremse Spiel zwischen dem Bremsbelag, dem Koppelglied und der Spindel vermieden wird.

### Zeichnungen

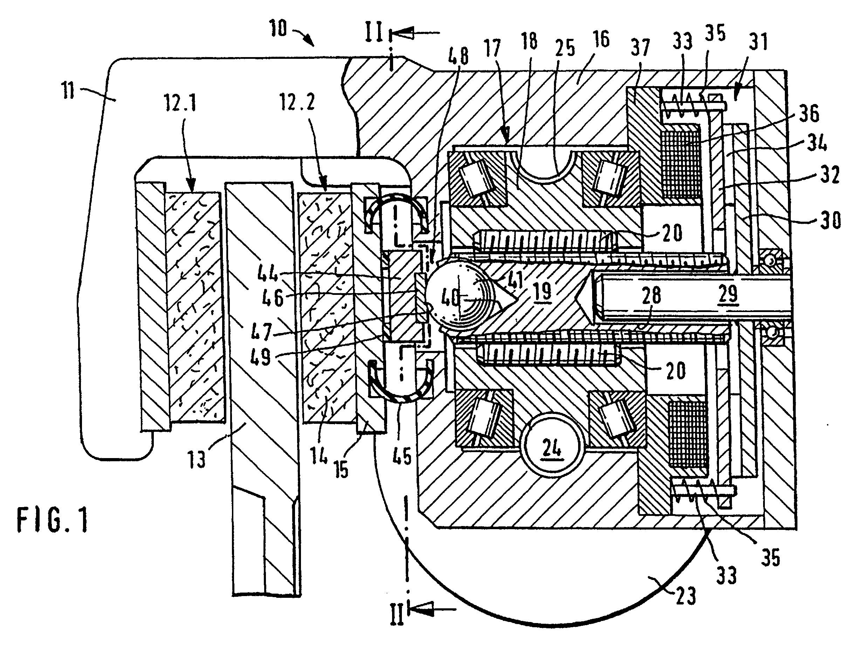

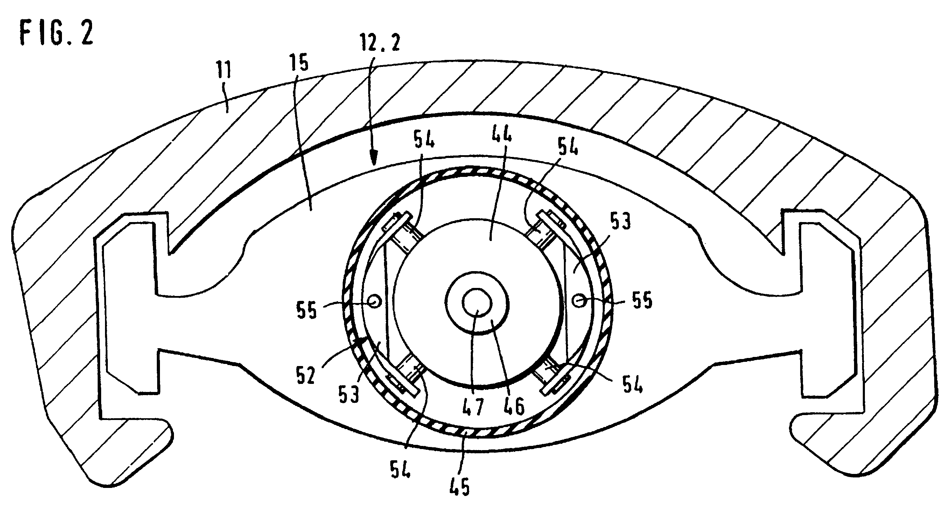

Ein Ausführungsbeispiel der Erfindung ist in den Zeichnungen vereinfacht dargestellt und in der nachfolgenden Beschreibung näher erläutert. Es zeigen Figur 1 einen Längsschnitt durch eine elektromechanische Bremse und Figur 2 einen Schnitt durch die Bremse entlang dem Linienzug II-II in Figur 1 in vergrößertem Maßstab.

### Beschreibung des Ausführungsbeispiels

Eine in Figur 1 dargestellte elektromechanische Bremse 10 ist als Scheibenbremse ausgebildet. Sie weist einen Bremssattel 11 auf, in dem ein Paar Reibbremsbeläge 12.1 und 12.2 beiderseits einer als rotierendes Reibelement wirkenden Bremsscheibe 13 angebracht sind. Der Bremsbelag 12.1 ist am Bremssattel 11 befestigt, der Bremsbelag 12.2 ist verschiebbar im Bremssattel gelagert. Die Bremsbeläge 12.1 und 12.2 bestehen aus einer Verschleißschicht 14 und einer damit verbundenen Trägerplatte 15 aus Stahl. Zum Anpressen der Bremsbeläge 12.1 und 12.2 gegen die Bremsscheibe 13 ist in einem mit dem Bremssattel 11 vereinigten Gehäuse 16 ein selbsthemmungsfreier Spindeltrieb 17 in der Form eines Rollengewindetriebs angeordnet. Dieser weist eine im Gehäuse 16 drehbar gelagerte Spindelmutter 18, eine diese koaxial durchgreifende Gewindespindel 19 sowie eine Anzahl zwischen . der Spindelmutter und der Gewindespindel angeordnete Gewinderollen 20 auf. Die Gewinderollen 20 stehen mit einem Muttergewinde der Spindelmutter 18 und mit einem Spindelgewinde der Gewindespindel 19 in Eingriff. Durch rotierenden Antrieb der Spindelmutter 18 werden die Gewinderollen 20 zu einer umlaufenden Bewegung um die Gewindespindel 19 herum wie Planetenräder eines Planetengetriebes angetrieben. Während ihrer Umlaufbewegung rollen die Gewinderollen 20 im Muttergewinde und auf dem Spindelgewinde ab, das heißt sie führen während der Umlaufbewegung um die Gewindespindel 19 herum eine Rotationsbewegung um ihre eigene Achse aus. Die Rotationsbewegung der Gewinderollen 20 bewirkt eine translatorische Bewegung der Gewindespindel 19 in axialer Richtung.

Zum rotierenden Antrieb der Spindelmutter 18 weist die elektromechanische Bremse 10 einen elektrischen Antriebsmotor 23 mit einer Schnecke 24 auf, welche mit einer umlaufenden Verzahnung 25 der Spindelmutter 18 kämmt. Die Gewindespindel 19 ist in der einen Drehrichtung des Elektromotors 23 in einem Zustellhub zum Anpressen der Bremsbeläge 12.1 und 12.2 gegen die Bremsscheibe 13 längsbewegbar, in der anderen Drehrichtung des Motors ist sie in einem Rückstellhub zum Lösen der Bremsbeläge von der Bremsscheibe rückstellbar. Die Gewindespindel 17 bildet somit ein elektromotorisch bidirektional längsbewegbares Betätigungsglied der elektromechanischen Bremse 10.

Für die ordnungsgemäße Funktion der elektromechanischen Bremse 10 ist es erforderlich, die Gewindespindel 19 gegen Drehen zu sichern. Die Spindel 19 ist daher an ihrem bremsbelagabgewandten Endabschnitt mit einer Längsbohrung 28 versehen, in welche ein drehbar und axial unverschiebbar im Gehäuse 16 gelagerter Wellenstumpf 29 gleichachsig eingreift. Eine nicht dargestellte Formschlußverbindung zwischen Wellenstumpf 29 und Gewindespindel 19 verhindert eine Relatiwerdrehung zwischen diesen beiden Bauteilen. Mit dem Wellenstumpf 29 ist eine erste Kupplungsscheibe 30 einer Schaltkupplung 31 drehfest verbunden. Eine zweite Kupplungsscheibe 32 der Schaltkupplung 31 ist dagegen axial verschiebbar und unverdrehbar auf Zapfen 33 gelagert. Die beiden Kupplungsscheiben 30 und 32 stehen durch eine komplementär ausgebildete Verzahnung 34 aufgrund der Wirkung von auf den Zapfen 33 geführten Anpreßfedern 35 miteinander in Eingriff. In dem in Figur 1 wiedergegebenen eingerückten Zustand der Schaltkupplung 31 ist demzufolge die erste Kupplungsscheibe 30 unverdrehbar gehalten. Die Schaltkupplung 31 wirkt somit als Drehsicherungseinrichtung für die Gewindespindel 19. Die Schaltkupplung 31 ist elektromagnetisch trennbar. Hierzu ist die als Ankerscheibe dienende zweite Kupplungsscheibe 32 bei Bestromung einer Wicklung 36 in einer gehäusefesten Wicklungsträgerplatte 37 von der ersten Kupplungsscheibe 30 abhebbar. Diese Funktion der Schaltkupplung 31 wird lediglich bei Auftreten eines später beschriebenen Fehlerfalls benötigt.

Die Gewindespindel 19 weist an ihrem belagsseitigen Endabschnitt einen Lagersitz 40 für eine aus gehärtetem Stahl bestehende Kugel 41 auf. Die in die Spindel 19 eingebördelte Kugel 41 ist mit geringem Spiel im Lagersitz 40 aufgenommen; sie kann sich also relativ zur Spindel drehen.

An der Gewindespindel 19 ist ein plattenförmiges Koppelglied 44 unter Federkraftwirkung abgestützt. Diese Wirkung ist von einem federelastisch ausgebildeten Dichtbalg 45 erzeugt, welcher das Koppelglied 44 mit Abstand umfangsseitig umhüllend einerseits an der Trägerplatte 15 des Bremsbelags 12.2 und andererseits am Gehäuse 16 der Bremse 10 angreift. Diese Anordnung bewirkt, daß das Koppelglied 44 auch am Bremsbelag 12.2 abgestützt ist. Seitens der Spindel 19 ist in das Koppelglied 44 eine scheibenförmige Lagerpfanne 46 aus gehärtetem Stahl mit einem konkaven, kugelkalottenförmigen Lagersitz 47 eingepreßt. Der Lagersitz 47 ist hinsichtlich seines Durchmessers und seines Radius derart auf die Abmessungen der Kugel 41 abgestimmt, daß bei ausreichender Belastungsfähigkeit eine nur wenige Quadratmillimeter große Berührungsfläche und demzufolge eine reibungsarme Drehlagerung 48 zwischen dem Koppelglied 44 und der Gewindespindel 19 besteht. Zwischen dem Koppelglied 44 und der Trägerplatte 15 des Bremsbelags 12.2 ist eine auf das Koppelglied aufgebrachte Gleitschicht 49 vorgesehen, mit der eine Gleitbeweglichkeit zwischen dem Koppelglied und dem Bremsbelag quer zur Spindellängsachse erzielt ist. Abweichend vom Ausführungsbeispiel kann das Koppelglied 44 auch einstückig mit der Lagerpfanne 46 ausgebildet sein.

Für die Aufrechterhaltung der Gleitbeweglichkeit zwischen dem Koppelglied 44 und dem Bremsbelag 12.2 ist in Figur 2 eine mit begrenzter Beweglichkeit ausgestattete Federkupplung 52 vorgesehen. Die Federkupplung 52 besitzt zwei aus verwundenen Blattfederstreifen gebildete Federelemente 53, welche einander diametral gegenüberliegend umfangsseitig des Koppelgliedes 44 innerhalb des Dichtbalges 45 angeordnet sind. Endseitig sind die Federelemente 53 an Zapfen 54 befestigt, welche mit 90°-Teilung radial verlaufend am Umfang des Koppelgliedes 44 angeordnet sind. In ihrem Mittelabschnitt sind die Federelemente 53 mit in der Trägerplatte 15 des Bremsbelags 12.2 verankerten Zapfen 55 verbunden. Die Federkupplung 52 läßt eine allseitige Bewegung quer zur Längsachse der Gewindespindel 19 zwischen dem Bremsbelag 12.2 und dem Koppelglied 44 zu. Abweichend vom Ausführungsbeispiel können die Federelemente 53 eine andere Form haben. Von wesentlicher Bedeutung ist jedoch, daß bei einer Auslenkung der Federelemente 53 relativ niedrige Rückstellkräfte zwischen dem Koppelglied 44 und dem Bremsbelag 12.2 wirksam sind.

Die Federkupplung 52 hat beim Betrieb der elektromechanischen Bremse 10 folgende Wirkungsweise: durch Bestromen des Antriebsmotors 23 werden im Zustellhub durch Längsbewegung der Gewindespindel 19 die beiden Bremsbeläge 12.1 und 12.2 zur Anlage an der Bremsscheibe 13 gebracht. Der Bremsbelag 12.2 hat in seiner Führung am Bremssattel 11 notwendigerweise Spiel, welches beim Angriff des Bremsbelags an der Bremsscheibe 13 je nach deren Drehrichtung ein Versetzen des Bremsbelags überwiegend in Umfangsrichtung der Bremsscheibe bewirkt. Die reibungsvermindernde Gleitschicht 49 am Koppelglied 44 verhindert, daß dieses der Bewegung des Bremsbelags 12.2 folgt. Der Lagersitz 47 am Koppelglied 44 verbleibt daher in achsgleicher Zuordnung zur Gewindespindel 19. Der Versatz des Bremsbelages 12.2 in Umfangsrichtung der Bremsscheibe 19 hat daher keine nennenswerten Querkräfte auf die Gewindespindel 19 zur Folge. Es sind lediglich die geringen Rückstellkräfte der Federelemente 53 am Koppelglied 44 wirksam, welche sich nur geringfügig auf die reibungsarme Führung der Gewindespindel 19 im Spindeltrieb 17 auswirken.

Wird beim Lösen der Bremse 10 im Rückstellhub die Spindel 19 zurückgestellt, bewirkt der federelastische Dichtbalg 45 die spielfreie Abstützung des Koppelgliedes 44 an der Spindel 19 und des Bremsbelags 12.2 am Koppelglied 44. Beim Abheben des Bremsbelags 12.2 von der Bremsscheibe 13 stellen die Federelemente 53 der Federkupplung 52 sicher, daß der Bremsbelag seine ursprüngliche Lage einnimmt.

Fällt bei einer Bremsung der elektrische Antriebsmotor 23 aus, so wird von der Bremssteuerung die Schaltkupplung 31 bestromt und die zweite Kupplungsscheibe 32 von der ersten Kupplungsscheibe 30 abgehoben. Die im wesentlichen durch elastische Verformung des Bremssattels 11 und der Verschleißschicht 14 der Bremsbeläge 12.1 und 12.2 hervorgerufene Axialkraft auf die Gewindespindel 19 stellt sicher, daß diese sich in Rotation versetzt und einen Rückstellhub ausführt, der einen im wesentlichen völligen Abbau der Bremskraft an der Bremsscheibe 13 bewirkt. Dabei wird die Selbstrückstellung der Gewindespindel 19 dadurch unterstützt, daß aufgrund der Gleitbeweglichkeit des Koppelgliedes 44 relativ zum Bremsbelag 12.2 allenfalls geringe Querkräfte die Reibungsarmut der Gewindespindel 19 beeinträchtigen. Die reibungsarme Ausgestaltung der Drehlagerung 48 ist ebenfalls für die Selbstrückstellung der Gewindespindel 19 förderlich. Aber auch bei gestörter Drehlagerung 48 ist durch die drehbare Lagerung der Kugel 41 in der Spindel 19 deren Selbstrückstellung gegeben.

## Patentansprüche

1. Elektromechanische Bremse (10) für Kraftfahrzeuge mit einer elektromotorisch bidirektional längsbewegbaren, selbsthemmungsfreien Spindel (19) zum Anpressen wenigstens eines Bremsbelags (12.2) gegen ein rotierendes Reibelement (13) in einem Zustellhub und zum Lösen des Bremsbelags (12.2) in einem Rückstellhub sowie mit einem zwischen der Spindel (19) und dem Bremsbelag (12.2) angeordneten Koppelglied (44), das in Eingriff mit der Spindel (19) steht und quer zur Spindellängsachse gleitbeweglich am Bremsbelag (12.2) abgestützt ist, **dadurch gekennzeichnet, daß** das Koppelglied (44) plattenförmig ausgebildet sowie belagseitig mit einer Gleitschicht (49) und spindelseitig mit einem Lagersitz (47) für die endseitig kugelförmig ausgebildete Spindel (19) versehen ist.

2. Bremse nach Anspruch 1, **dadurch gekennzeichnet, daß** in das Koppelglied (44) spindelseitig eine den Lagersitz (47) aufweisende Lagerpfanne (46) aus gehärtetem Stahl eingepreßt ist.

3. Bremse nach Anspruch 1, **dadurch gekennzeichnet, daß** in der Spindel (19) endseitig eine aus gehärtetem Stahl bestehende Kugel (41) drehbar aufgenommen ist.

4. Bremse nach Anspruch 1, **dadurch gekennzeichnet, daß** das Koppelglied (44) mittels Federelementen (53) mit dem Bremsbelag (12.2) verbunden ist.

5. Bremse nach den Ansprüchen 2 und 4, **dadurch gekennzeichnet, daß** der Bremsbelag (12.2) und das Koppelglied (44) durch einen das Koppelglied (44) mit Federelementen (53) umhüllenden, federelastischen Dichtbalg (45) axial spielfrei aneinander sowie die Lagerpfanne (46) des Koppelgliedes (44) spielfrei an der Spindel (19) abgestützt sind.

## Claims

1. Electromechanical brake (10) for motor vehicles, with a selflocking-free spindle (19) that can be moved bidirectionally in a longitudinal direction by electric motor in order to press at least one brake lining (12.2) against a rotating friction element (13) in an advancing stroke and in order to release the brake lining (12.2) in a return stroke, and with a coupling member (44), which is disposed between the spindle (19) and the brake lining (12.2), is in engagement with the spindle (19) and is supported against the brake lining (12.2) in such a way that it can slide transversely to the longitudinal axis of the spindle, **characterized in that** the coupling member (44) is of plate-shaped design and, towards the lining, is provided with a sliding layer (49) and, toward the spindle, is provided with a bearing seat (47) for the spindle (19), which is of ball-shaped design at the end.

2. Brake according to Claim 1, **characterized in that** a hardened-steel bearing socket (46), which includes the bearing seat (47), is press-fitted into the coupling member (44) on a side oriented towards the spindle.

3. Brake according to Claim 1, **characterized in that** a hardened-steel ball (41) is contained so that it can rotate in the end of the spindle (19).

4. Brake according to Claim 1, **characterized in that** the coupling member (44) is connected to the brake lining (12.2) by means of spring elements (53).

5. Brake according to Claims 2 and 4, **characterized in that** the brake lining (12.2) and the coupling member (44) are supported against each other in an axially play-free manner by means of a spring-elastic sealing bellows (45) which surrounds the coupling member (44) with the spring elements (53), and the bearing socket (46) of the coupling member (44) is supported in a play-free manner against the spindle (19).

## Revendications

1. Frein électromécanique (10) pour des véhicules automobiles, comportant une broche (19), non autoblocante, entraînée dans un mouvement longitudinal, de manière bidirectionnelle par un moteur électrique, pour presser au moins une garniture de frein (12.2) contre un élément de friction (13), rotatif, au cours d'une course de rapprochement, ainsi que pour desserrer la garniture de frein (12.2) au cours de la course de rappel, avec un organe de couplage (44) prévu entre la broche (19) et la garniture de frein (12.2), cet organe étant en prise avec la broche (19) et appuyé transversalement à l'axe longitudinal de la broche, de manière à pouvoir se déplacer en glissement contre la garniture de frein (12.2),
**caractérisé en ce que**
l'organe de couplage (44) est en forme de plaque, et il comporte du côté de la garniture une couche de glissement (49) et du côté de la broche un siège de palier (47) pour l'extrémité en forme de bille de la broche (19).

2. Frein selon la revendication 1,
**caractérisé en ce que**
l'organe de couplage (44) comporte, du côté de la broche, une coupelle de palier (49) ayant un siège de palier (47), en acier traité, pressé dans cet organe de couplage.

3. Frein selon la revendication 1,
**caractérisé en ce que**
l'extrémité de la broche (19) est munie à rotation d'une bille (41) en acier traité.

4. Frein selon la revendication 1,
**caractérisé en ce que**
l'organe de couplage (44) est relié à la garniture de frein (12.2) par des éléments de ressort (53).

5. Frein selon l'une quelconque des revendications 2 et 4,
**caractérisé en ce que**
la garniture de frein (12.2) et l'organe de couplage (44) sont soutenus axialement, sans jeu, l'un contre l'autre, par un soufflet d'étanchéité (45) élastique, entourant l'organe de couplage (44) et les éléments de ressort (53), et la coupelle de palier (46) de l'organe de couplage (44) est appliquée sans jeu contre la broche (19).
